# EUROPÄISCHE PATENTSCHRIFT

(11) **EP 2 161 097 B1**
(45) Veröffentlichungstag und Bekanntmachung des Hinweises auf die Patenterteilung: **20.06.2012**
(21) Anmeldenummer: 09001227.9
(22) Anmeldetag: 29.01.2009
(51) Int. Cl.: B23Q 7/04, B23B 13/12

(54) **Vorrichtung zum Ausziehen einer Stange aus dem Spannfutter einer Drehmaschine**
Device for pulling a rod out of the collet chuck of a rotating machine
Dispositif d'extraction d'une tige à partir d'un mandrin d'une machine rotative

(30) Priorität: 28.08.2008 IT MI20081543
(43) Veröffentlichungstag der Anmeldung: 10.03.2010
(73) Patentinhaber: Macpresse Europa S.r.l., 20080 Vernate (MI) (IT)
(72) Erfinder: Scotuzzi, Cristian, 20080 Pasturago di Vernate (IT); Negri, Paolo, 20082 Motta Visconti (IT)
(74) Vertreter: Mayer, Hans Benno

(56) Entgegenhaltungen:
- DD-A1- 244 089
- DE-A1- 4 142 418

## Beschreibung

Die vorstehende Erfindung betrifft eine Vorrichtung zum Ausziehen einer Stange aus dem Spannfutter einer Drehmaschine.

Es sind bereits Werkzeugmaschinen, insbesondere Drehmaschinen bekannt geworden, die mit einer Vorrichtung für den gesteuerten Vorschub einer langen Stange in Richtung eines selbstzentrierenden Spannfutters ausgerüstet sind. Diese Vorrichtungen weisen eine gewisse Komplexität in ihrem Aufbau auf und sind nur dann wirtschaftlich einsetzbar, wenn die Anzahl der gedrehten Werkstücke sehr hoch ist und somit den Einsatz automatischer Vorschubeinrichtungen rechtfertigt.

Sofern es erforderlich ist, von einer relativ kurzen Stange nur eine beschränkte Anzahl von gedrehten Werkstücken herzustellen, z.B. einer kleinen Serie von abzustechenden Scheiben, so ist es nicht wirtschaftlich, eine der zahlreichen auf dem Markt bekannten Vorschubvorrichtungen einzusetzen, besonders wenn man die recht hohen Anschaffungskosten dieser Vorrichtungen berücksichtigt.

Aus der Offenlegungsschrift DE 4142418 A1 ist eine Einrichtung zur Vorschubsteuerung eines Werkstückes in einer automatischen Werkzeugmaschine bekannt geworden. In dieser Schrift ist ein Kreuzschlitten vorgesehen, der drehbar einen Arm aufnimmt, der an einem Ende mit einem Bearbeitungswerkzeug und auf der gegenüberliegenden Seite mit einem Magneten ausgerüstet ist, wodurch bei Verbindung dieses Magneten mit dem freien Ende einer zu bearbeitenden Stange, durch Verfahren des Kreuzschlittens, eine Vorschubbewegung an die zu bearbeitende Stange übertragbar wird.

Die vom Stand der Technik her bekannt gewordene Vorrichtung weist einen aufwendigen Aufbau auf, bestehend aus einem steuerbaren Kreuzschlitten und einem gesteuert drehbaren Werkzeugaufnahmearm, der an einem Ende freiliegend einen Magneten aufweist. Nachteilig ist bei dieser Ausführungsform, dass dieser Magnet an seiner freien Fläche von Drehspänen belegt werden kann, die bei Verwendung der Vorrichtung zu erheblichen Ungenauigkeiten beim Ausziehvorgang der zu bearbeitenden Stange aus dem Drehfutter führen.

Desweiteren scheint es nicht möglich zu sein, die vom Magneten erfassten Werkstücke ordnungsgemäß nach Bearbeitung abzulegen, da einem derartigen Vorgang das obere Bauteil des Kreuzschlittens im Wege stehen dürfte.

Es ist daher Aufgabe der vorstehenden Erfindung, eine Vorrichtung zum Ausziehen einer Stange aus einem Spannfutter einer Drehmaschine vorzuschlagen, bei dem unter Einsatz eines Magneten die Übernahme eines abgetrennten Werkstückes ermöglicht wird und gleichzeitig ein Ansammeln von Bearbeitungsspänen an der Vorderseite der Vorrichtung sicher vermieden wird.

Es ist auch Aufgabe der vorstehenden Erfindung, eine Vorrichtung mit sehr einfachem Aufbau aber zuverlässiger Wirkungsweise vorzuschlagen, mit der es möglich ist, eine zu bearbeitende Stange aus dem Spannfutter einer Drehmaschine zu ziehen und das Werkstück, nach dem Abstechvorgang, vorsichtig abzulegen.

Diese Aufgabe wird erfindungsgemäß mit einer Vorrichtung zum Ausziehen einer Stange aus dem Spannfutter einer Drehmaschine mit den Merkmalen des Anspruchs 1 erreicht.

Weitere Merkmale der Erfindung können der nun folgenden Beschreibung, den Unteransprüchen und den beigefügten Zeichnungen entnommen werden.

Der Erfindungsgegenstand wird nun genauer beschrieben und in den beigefügten Zeichnungen dargestellt:
Figur 1 zeigt in Ansicht die Auszugsvorrichtung gemäß der vorstehenden Erfindung sowie ein Werkstück, das in einer Drehmaschine abzustechen ist;
Figur 2 zeigt im Schnitt die Auszugsvorrichtung bei Berühren mit dem Werkstück, und
Figur 3 zeigt schematisch das ausgezogene Werkstück während des Abstechvorganges.

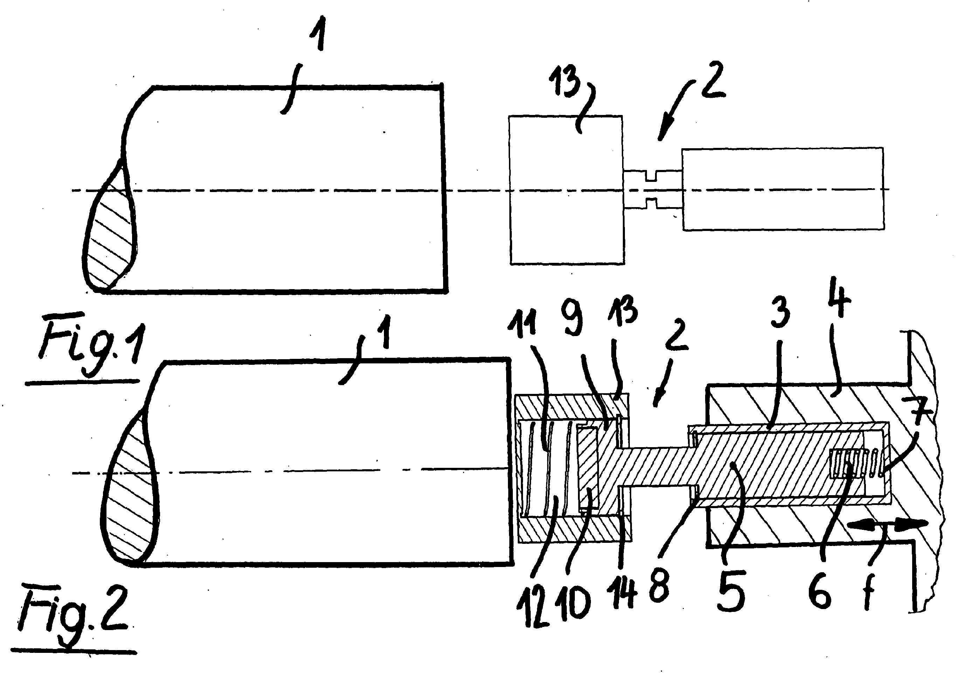

Wie der Figur 1 zu entnehmen ist, befindet sich ein Werkstück 1 im Spannfutter (nicht dargestellt) einer Drehmaschine.

Mit dem Spannfutter der Drehmaschine wird das Werkstück 1 in Drehbewegung versetzt.

Vor dem Werkstück 1 ist eine erfindungsgemäße Auszugsvorrichtung 2 angeordnet.

Der Figur 2 kann ebenfalls das zu bearbeitende Werkstück 1 sowie die im Schnitt dargestellte Auszugsvorrichtung 2 entnommen werden.

In vorteilhafter Weise ist der zylindrische Körper 3 der Vorrichtung 2 in einer Aufnahme 4 gelagert, die Bestandteil eines Revolverkopfes ist.

Im Inneren des zylindrischen Körpers 3 ist ein gesamthaft mit 5 gekennzeichnetes Bauteil angeordnet.

Die Rückseite des Bauteiles 5 nimmt in einer Ausnehmung eine Feder 6 auf, deren freies Ende am Boden 7 des Körpers 3 anliegt.

Die Vorwärtsbewegung des zylindrischen Bauteils 5 wird durch einen Federring 8 begrenzt.

Die Verlängerung des zylindrischen Bauteiles nimmt an seiner Vorderseite eine Verdickung 9 auf, die mit einem Permanentmagneten 10 ausgerüstet ist.

Die Verdickung 9 bewegt sich gegen die Wirkung der Feder 11 im Inneren einer Kammer 12, die in einen rohrförmigen Körper 13 eingebracht ist.

Die Verdickung 9 wird durch die Feder 11 beaufschlagt und, zusammen mit dem Magneten 10, wird die Verdickung 9 im Inneren des rohrförmigen Körpers 13 blockiert, dank der Vorsehung eines elastischen Ringes 14.

Dank der Möglichkeit den Werkzeugträger 4 gesteuert zu bewegen, ebenso wie die Auszugsvorrichtung 2, wie in Figur 2 durch den Doppelpfeil f aufgezeigt ist, wird es möglich den rohrförmigen Körper 13 mit dem vorderen Ende des Werkstückes 1 in Verbindung zu bringen und, aufgrund der Vorsehung des Magneten 10 wird es möglich sein, das Werkstück 1 aus dem Spannfutter der Maschine auszuziehen und in eine Bearbeitungsstellung zu verfahren.

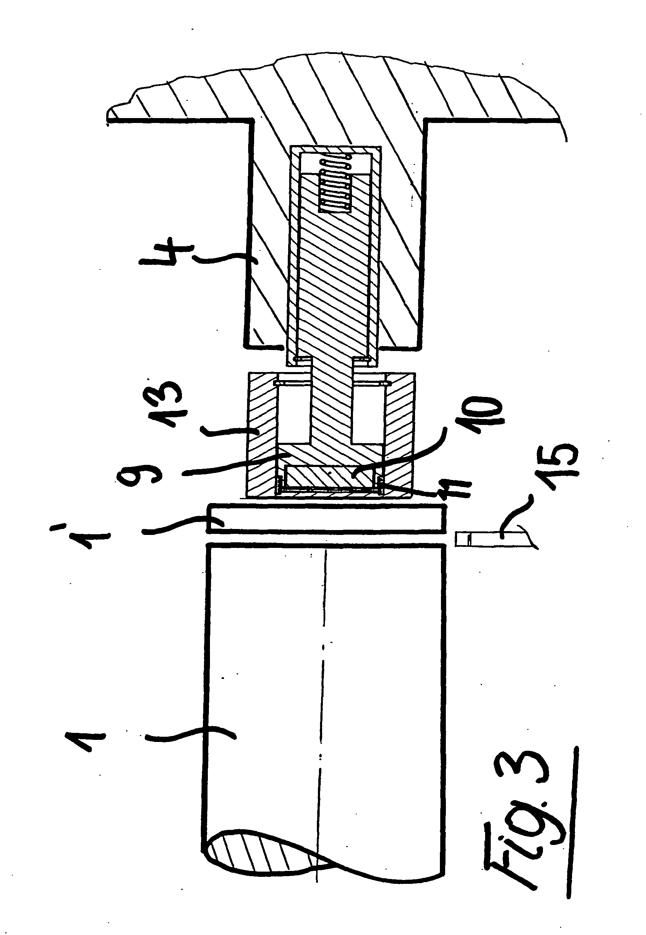

Wie der Figur 3 zu entnehmen ist, sobald sich das Werkstück 1 in Bearbeitungsstellung befindet, besteht die Möglichkeit unter Einsatz eines Abstechwerkzeuges 15 vom Werkstück 1 eine Scheibe 1' abzustechen. Die Scheibe 1' fällt nach Durchführung des Abstechvorganges nicht gemeinsam mit den Spänen in einen eigens dafür vorgesehenen Behälter, sondern die abgestochene Scheibe 1' bleibt frontal am rohrförmigen Körper blockiert, dank der Wirkung des Magneten 10, der am Ende der Verdickung 9 angeordnet ist, der im rohrförmigen Körper 13 verschiebbar angeordnet ist. Durch entsprechende Steuerung der Bewegung der Aufnahme 4 kann die Scheibe 1' in einen eigens dafür vorgesehenen Behälter abgelegt werden, dieser Behälter unterscheidet sich von dem üblichen Behälter zur Aufnahme der Bearbeitungsspäne der Maschine.

Am Ende des Verfahrens gemäß Figur 3 wird die Vorrichtung 2 erneut in eine Stellung gemäß Figur 2 verschoben.

In vorteilhafter Weise ist der rohrförmige Körper 13 aus nicht magnetisierbarem Material, z.B. aus Kunststoff hergestellt, was dazu führt, dass vor Erreichen der Vorrichtung 2 in eine Stellung, wie in Figur 2 dargestellt, sämtliche Bearbeitungsspäne vom rohrförmigen Körper 13 abfallen.

Im Anschluss, dank der gesteuerten Bewegung der Aufnahme 4, nähert sich die Auszugsvorrichtung erneut dem Werkstück 1 und während der Verschiebebewegung überwindet die Verdickung 9 die Wirkung der vorderen Feder 11, der Magnet 10 nähert sich dem Ende des Werkstückes 1 und erlaubt es, das Werkstück 1 mittels einer ausreichenden magnetischen Kraft festzulegen, um dann das Werkstück 1 erneut in eine gewünschte Bearbeitungslage zu verschieben.

Die Vorrichtung zum Ausziehen der Stange aus dem Spannfutter der Drehmaschine arbeitet wie folgt:

Die Auszugsvorrichtung 2 nähert sich dem Ende des Werkstückes 1 und der rohrförmige Körper 13 tritt mit dem freien Ende des Werkstückes 1 in Verbindung.

Eine weitere Bewegung der Aufnahme 4 führt zu einer Bewegung des Bauteiles 9, welches den Permanentmagneten 10 aufnimmt, gegen die Wirkung der Feder 11. Dadurch, dank der magnetischen Kraft, welche auf das Werkstück 1 einwirkt, wird das Werkstück einer Vorschubbewegung unterzogen. Befindet sich das Werkstück 1 in der gewünschten Stellung, so erfolgt ein Schließen des selbstzentrierenden Spannfutters der Werkzeugmaschine und die Aufnahme 4 des Revolverkopfes kann zurückgefahren werden, wobei das Ende des Werkstückes freigelegt wird, um weiteren Bearbeitungsvorgängen unterzogen zu werden.

## Patentansprüche

1. Vorrichtung zum Ausziehen einer Stange aus dem Spannfutter einer Drehmaschine, wobei vor der Stange (1) eine Auszugsvorrichtung (2) mit einem Magneten (10) vorgesehen ist, die aus einem zylindrischen Körper (3) besteht, der in einer Halterung (4) einer Werkzeugaufnahmevorrichtung der Drehmaschine gelagert ist,
**dadurch gekennzeichnet,**
**dass** die Auszugsvorrichtung (2) ein Bauteil (5) aufweist, das verschiebbar in dem zylindrischen Körper (3) angeordnet ist und das verschiebbare Bauteil (5) an seinem freien Ende eine Verdickung (9) aufweist, die mit einem Permanentmagneten (10) bestückt ist, und diese Verdickung (9) gegen die Wirkung einer Feder (11) verschiebbar im Inneren eines rohrförmigen Körpers (13) angeordnet ist, und an der Rückseite des Bauteiles (5), in einer Ausnehmung eine Feder (6) vorgesehen ist, deren freies Ende am Boden (7) des zylindrischen Körpers (3) anliegt.

2. Vorrichtung, nach Patentanspruch 1, **dadurch gekennzeichnet, dass** der zylindrische Körper (3) der Auszugsvorrichtung (2) in einer Halterung (4) angeordnet ist, die Bestandteil der Werkzeugaufnahmevorrichtung ist.

3. Vorrichtung, nach Patentanspruch 1, **dadurch gekennzeichnet, dass** die Vorwärtsbewegung des zylinderförmigen Bauteiles (5) durch einen elastischen Ring (8) begrenzt wird.

4. Vorrichtung, nach Patentanspruch 1, **dadurch gekennzeichnet, dass** sich die Verdickung (9) gegen die Wirkung einer Feder (11) bewegt, die im Inneren einer Kammer (12) des rohrförmigen Körpers (13) angeordnet ist.

5. Vorrichtung, nach Patentanspruch 1, **dadurch gekennzeichnet, dass** die Verdickung (9) von einer Feder (11) beaufschlagt wird und zusammen mit dem Permanentmagneten (10) im Inneren des rohrförmigen Bauteiles (13), dank der Vorsehung eines elastischen Ringes (14), arretierbar ist.

6. Vorrichtung, nach Patentanspruch 1, **dadurch gekennzeichnet, dass** der rohrförmige Körper (13) aus nicht magnetisierbarem Material besteht, sondern in vorteilhafter Weise aus Kunststoff.

## Claims

1. Device for extracting a rod from the chuck of a lathe, wherein an extraction device (2) having a magnet (10) is provided in front of the rod (1), said extraction device (2) consisting of a cylindrical body (3) which is mounted in a holder (4) of a tool-holding device of the lathe,
**characterized**
**in that** the extraction device (2) has a component (5) which is arranged in a movable manner in the cylindrical body (3) and the movable component (5) has at its free end a thickened portion (9) which is fitted with a permanent magnet (10), and this thickened portion (9) is arranged inside a tubular body (13) in a movable manner counter to the action of a spring (11) and a spring (6) is provided in a recess on the rear side of the component (5), the free end of said spring (6) resting against the bottom (7) of the cylindrical body (3).

2. Device according to Claim 1, **characterized in that** the cylindrical body (3) of the extraction device (2) is arranged in a holder (4) which is a constituent of the tool-holding device.

3. Device according to Claim 1, **characterized in that** the forward movement of the cylindrical component (5) is limited by an elastic ring (8).

4. Device according to Claim 1, **characterized in that** the thickened portion (9) moves counter to the action of a spring (11) which is arranged inside a chamber (12) in the tubular body (13).

5. Device according to Claim 1, **characterized in that** the thickened portion (9) is acted upon by a spring (11) and is lockable, together with the permanent magnet (10), inside the tubular component (13) by virtue of the provision of an elastic ring (14).

6. Device according to Claim 1, **characterized in that** the tubular body (13) consists not of magnetizable material but advantageously of plastics material.

## Revendications

1. Dispositif d'extraction d'une tige à partir d'un mandrin d'une machine rotative, un dispositif d'extraction (2) avec un aimant (10) étant prévu avant la tige (1), lequel se compose d'un corps cylindrique (3) qui est monté dans un support (4) d'un dispositif porte-outil de la machine rotative,
**caractérisé en ce que**
le dispositif d'extraction (2) présente un composant (5) qui est disposé de manière déplaçable dans le corps cylindrique (3) et le composant déplaçable (5) présente à son extrémité libre un épaississement (9) qui est équipé d'un aimant permanent (10), et cet épaississement (9) est disposé de manière déplaçable à l'encontre de l'effet d'un ressort (11) à l'intérieur d'un corps de forme tubulaire (13), et un ressort (6) est prévu au niveau du côté arrière du composant (5), dans un évidement, l'extrémité libre du ressort (6) s'appliquant contre le fond (7) du corps cylindrique (3).

2. Dispositif selon la revendication 1, **caractérisé en ce que**
le corps cylindrique (3) du dispositif d'extraction (2) est disposé dans un support (4) qui fait partie du dispositif porte-outil.

3. Dispositif selon la revendication 1, **caractérisé en ce que**
le mouvement d'avance du composant cylindrique (5) est limité par une bague élastique (8).

4. Dispositif selon la revendication 1, **caractérisé en ce que**
l'épaississement (9) se déplace à l'encontre de l'effet d'un ressort (11) qui est disposé à l'intérieur d'une chambre (12) du corps de forme tubulaire (13).

5. Dispositif selon la revendication 1, **caractérisé en ce que**
l'épaississement (9) est sollicité par un ressort (11) et peut être bloqué conjointement avec l'aimant permanent (10) à l'intérieur du composant de forme tubulaire (13) grâce à l'installation d'une bague élastique (14).

6. Dispositif selon la revendication 1, **caractérisé en ce que**
le corps de forme tubulaire (13) se compose de matériau non aimantable, de préférence de plastique.
